# EUROPÄISCHE PATENTSCHRIFT

(11) **EP 0 575 354 B1**
(45) Veröffentlichungstag und Bekanntmachung des Hinweises auf die Patenterteilung: **07.12.1994**
(21) Anmeldenummer: 92904565.6
(22) Anmeldetag: 14.02.1992
(51) Int. Cl.: B60G 3/20, B62D 7/14

(54) **RADAUFHÄNGUNG**
WHEEL SUSPENSION
SYSTEME DE SUSPENSION DE ROUES

(30) Priorität: 14.03.1991 DE 4108164
(43) Veröffentlichungstag der Anmeldung: 29.12.1993
(73) Patentinhaber: Dr.Ing.h.c. F. Porsche Aktiengesellschaft, 70435 Stuttgart (DE)
(72) Erfinder: SOMMERER, Karl, D-7135 Wiernsheim (DE); SCHOTE, Norbert, D-7403 Ammerbuch 5 (DE)
(86) Internationale Anmeldenummer: EP9200317
(87) Internationale Veröffentlichungsnummer: WO9216386

(56) Entgegenhaltungen:
- EP-A- 0 199 915
- EP-A- 0 265 959
- DE-A- 1 938 850
- DE-A- 2 818 198
- DE-A- 3 642 421
- DE-A- 3 939 313
- DE-A- 3 941 083
- GB-A- 2 089 742
- US-A- 3 858 901
- W. Matschinsky, "Die Radführungen der Strassenfahrzeuge", 1987, Verlag TÜV Rheinland, Köln

## Beschreibung

Die Erfindung bezieht sich auf eine Radaufhängung für die angetriebenen Hinterräder eines Kraftfahrzeugs nach dem Oberbegriff des Anspruchs 1.

Es ist eine derartige Doppelquerlenker-Radaufhängung für ungelenkte Räder bekannt (US-Report: On the sixth international technical conference on experimental safety vehicles; 12. - 15.10.1976, Seiten 656 bis 664), die aus einem untenliegenden Dreieckslenker und einem obenliegenden aufgelösten Lenker mit zwei Einzellenkern besteht, denen benachbart ein weiterer Lenker zugeordnet ist. Die in übereinandergelegenen horizontalen Ebenen angeordneten Anlenkungen bilden gemeinsam eine elastokinematische Schwenkachse für eine Radstellungsänderung bei auf das Rad einwirkenden Umfangs- und Seitenkräften. Diese Schwenkachse ist hierzu in der Weise ausgerichtet, daß sich in der Radaufstandsebene ein außerhalb der Spurweite und - in bezug auf die Fahrtrichtung - hinter einer senkrechten Radmittenquerebene liegender Radlenkpol ausbildet. Desweiteren ist aus der DE-C 19 38 850 eine Radaufhängung für gelenkte Vorderräder mit einem unteren Dreieckslenker und einem oberen aufgelösten Lenker bekannt. Die Verbindungslinien der Schnittpunkte der Längsachsen dieser in übereinander angeordneten horizontalen Ebenen gelegenen Radführungsglieder bilden eine elastokinematische Schwenkachse des Rades. Desweiteren ist aus der DE-A-3 642 421 eine Radaufhängung für ungelenkte Räder eines Kraftfahrzeugs mit einem unteren Dreieckslenker und einem oberen aufgelösten Lenker sowie einer Spurstange bekannt. Der Dreieckslenker ist aufbauseitig in längselastischen Lagern gehalten, wobei die Spurstange in einem Gelenk abgestützt ist und bei auf das Rad einwirkenden Umfangs- und Seitenkräften eine Verlagerung des Dreieckslenkers in Längsrichtung bewirkt und hierdurch eine Radstellungsänderung in Richtung Vorspur ausgelöst wird.

Diese bekannten Anordnungen von Radführungsgliedern mit sich bildender elastokinematischer Schwenkachse des Rades und ein sich darstellender Radlenkpol in der Radaufstandsebene bewirken Radstellungsänderungen im Fahrbetrieb. Diese werden durch am Rad wirkende Kräfte sowie bei Einfederungsbewegungen nur unzureichend erzielt, so daß insgesamt kein stabiles Fahrverhalten über den gesamten Geschwindigkeitsbereich in Überlagerung mit Brems- und Anfahr- bzw. Beschleunigungskräften bei Kurven- und Geradeausfahrt gewährleistet ist.

Die Wirkungen der bekannten Radaufhängungen sind aufgrund der Anlenkungen am Fahrzeugaufbau und einer hierdurch bedingten Anstellung und Lage zum Fahrzeugrad nur für ein spezielles Fahrzeug ausgerichtet. Eine Übertragung dieser bekannten Radaufhängung auf ein Fahrzeug bestimmter Ausbildung ist aufgrund der unterschiedlichen Aufbaustrukturen und somit bedingter veränderter Anlenkpunkte am Fahrzeugaufbau sowie deren Abmessungen nicht in einfacher Weise möglich, so daß eine gewünschte Radstellungsänderung bei unterschiedlichen Fahrzuständen nicht optimal gewährleistet ist.

Der Erfindung liegt die Aufgabe zugrunde, eine Radaufhängung in Doppelquerlenkerbauweise für gelenkte und ungelenkte Hinterräder eines Kraftfahrzeuges zu schaffen, welche einerseits ein sicheres Fahrverhalten bei allen Fahrzzuständen mit gutem Fahrkomfort gewährleistet und andererseits die Radaufhängung in räumlich kompakter Form im Fahrzeug unterzubringen ist.

Diese Aufgabe wird erfindungsgemäß durch die kennzeichnenden Merkmale des Anspruchs 1 gelöst. Weitere vorteilhafte Merkmale beinhalten die Unteransprüche.

Nach der Erfindung sind die beiden Anlenkungen - mit bezug auf die Fahrtrichtung - in schräg nach vorn ansteigend verlaufenden schiefen Ebenen angeordnet und zueinander unter einem Winkel angestellt. In diesen Ebenen werden durch die aufbauseitigen Gelenke beabstandete Lenkerdrehachsen gebildet, die in Seitenansicht und in Fahrtrichtung gesehen unter unterschiedlich großen Winkeln zur Radaufstandsfläche stehen und in Draufsicht gesehen zueinander verschränkt unter einem Winkel angeordnet sind. Die den beiden Lenkerdrehachsen gegenüberliegenden radträgerseitigen Gelenke der beiden Anlenkungen sind nahe einer senkrechten Radmittenquerebene und unmittelbar benachbart einer senkrechten Radmittenlängsebene angeordnet. Es bildet sich über die Ausbildung der Anlenkungen eine elastokinematische Radschwenkachse - die in bezug auf die Fahrtrichtung - einen hinter der senkrechten Radmittenquerebene und außerhalb der senkrechten Radmittenlängsebene liegenden Lenkpol in der Radaufstandsebene bildet. Die aufbauseitigen Gelenke der Anlenkungen weisen eine zum elastischen Verschwenken um das vornliegende Gelenk der unteren Anlenkung definierte radiale Kennung auf.

Bei dieser Anordnung und Ausbildung der beiden Anlenkungen sowie der definierten Kennungen der Gelenke wird bei Umfangs- und Seitenkräfte auf das Rad eine gezielte Radstellungsänderung in Richtung Vorspur um das Gelenk des unteren Dreieckslenkers erzielt, was wesentlich durch eine elastokinematische Schwenkachse mit einem Durchstoßpunkt in der Radaufstandsebene bewirkt wird. Diese Schwenkachse verläuft durch von der oberen Anlenkung und der unteren Anlenkung mit dem Spurstangen-Lenker gebildete Schnittpunkte der Längsachsen der Lenker. Sie weist aufgrund der Anstellung der Lenker beider Anlenkungen eine Lage außerhalb der senkrechten Radmittenlängsebene mit einem Durchstoßpunkt (Radlenkpol) außerhalb der Spurweite bzw. der senkrechten Radmittenlängsebene und - in bezug auf die Fahrtrichtung - hinter der senkrechten Radmittenquerebene auf. Durch diese Anordnung des Radlenkpols wird beim Einleiten einer Kurve eine Untersteuerungstendenz des Fahrzeugs erzielt.

Zur Radverstellung unter der Einwirkung von Kräften weisen die aufbauseitigen Lenkerlager der beiden Anlenkungen in der Weise zueinander abgestimmte radiale Kennungen auf, daß sich das Rad quasi um das - in bezug auf die Fahrtrichtung - vornliegende einen Drehpunkt bildende Gelenk der unteren Anlenkung verschwenken kann und das hintenliegende Gelenk hierzu eine wesentlich weichere radiale Kennung aufweist als das vorneliegende Gelenk.. Der Spurstangen- Lenker ist entsprechend dem vornliegenden Lenker der unteren Anlenkung aufbauseitig radial hart abgestützt. Bei der oberen Anlenkung ist der vornliegende Einzellenker aufbauseitig härter abgestützt als der hintenliegende Einzellenker. Der Spurstangen-Lenker ist so ausgebildet und gelagert, daß ein wesentlicher Kraftanteil bei Seitenkraft von diesem Lenker aufgenommen wird.

Die Lage der elastokinematischen Schwenkachse ist im wesentlichen bestimmend für die gewünschten Radstellungsänderungen bei jedem Fahrzustand. Um eine günstige Beeinflussung des Fahrverhaltens des Kraftfahrzeugs zu erzielen, müssen die beiden Anlenkungen bzw. die maßgeblichen Lenker dem entsprechend zueinander angestellt bzw. die Gelenke am Radträger und am Fahrzeugaufbau eine entsprechende Lage aufweisen. So ist es vorteilig, wenn der Durchstoßpunkt (Lenkpol) der Schwenkachse in der Radaufstandsebene in einem relativ großen Abstand zur senkrechten Radmittenlängs- und Querebene liegt. Dies wird erreicht, wenn die Schwenkachse - in Seitenansicht gesehen - vom hinter der senkrechten Radmittenquerebene gelegenen Lenkpol schräg nach vorne verläuft und die senkrechte Radmittenquerebene etwa in Höhe des radträgerseitigen Gelenks des hintenliegenden Einzellenkers der oberen Anlenkung schneidet. Hierzu trägt auch bei, daß das radträgerseitige Gelenk des Dreieckslenkers näher zur senkrechten Radmittenlängsebene angeordnet ist, als das entsprechende Gelenk des Spurstangen-Lenkers. Ebenso trägt die Lage der Einzellenker der oberen Anlenkung nach Anspruch 18 sowie die Lage des radträgerseitigen Gelenks der beiden Einzellenker der oberen Anlenkung nach Anspruch 19 zur Fixierung der elastokinematischen Schwenkachse wesentlich bei.

Die Spurstangen-Lenker der unteren Anlenkung beider Radseiten stützen sich bei nicht gelenkten Hinterrädern am Fahrzeugaufbau oder an einem Fahrschemel ab. Dagegen werden diese Spurstangen-Lenker bei gelenkten Hinterrädern mit einem dazwischengesetzten Stellzylinder verbunden. Dieser bewirkt in Abhängigkeit vom jeweiligen Zustand des Kraftfahrzeugs eine lenkende Radverstellung.

Eine weitere Schwenkachse, nämlich die kinematische Schwenkachse, welche insbesondere bei lenkbaren Hinterrädern wirkt, bildet sich durch die Anordnung der Lenker der oberen und unteren Anlenkungen zueinander, sowie durch die Lage der Gelenke am Fahrzeugaufbau sowie am Radträger aus. So verläuft die kinematische Schwenkachse durch von den Längsachsen der Lenker gebildete Schnittpunkte - in bezug auf eine Seitenansicht - von der Radaufstandsfläche schräg nach hinten oben entgegen der Fahrtrichtung. Desweiteren ist sie vor der senkrechten Radmittenquerebene angeordnet. Hierdurch bildet sich ein positiver Nachlaufwinkel, damit beim Lenken das kurvenäußere Rad in einen negativen Sturz gehen kann, was zur Erhöhung der maximal möglichen übertragbaren Seitenkraft von Vorteil ist. Ferner ergibt sich durch die Lage der kinematischen Schwenkachse ein negativer Störkrafthebelarm, damit eine möglichst günstige Elastokinematik erreicht wird und eine Korrektur des Vorspurwerts z.B. beim Lastwechsel sowie beim Bremsen erfolgen kann.

Die erfindungsgemäße Hinterachse ist so ausgebildet, daß alleinig durch die Anbindung des Spurstangen-Lenkers an einem Stellzylinder eine Verwendung als lenkbare Hinterachse erzielt wird, ohne daß die obere und untere Anlenkung in ihrer Geometrie verändert werden muß. Damit ein günstigerer Hebelarm zum Lenken erzielt wird, kann der Spurstangen-Lenker von seiner Erstreckung gemäß Anspruch 17 - in bezug auf die Fahrtrichtung - von außen vorn nach hinten innen zur Fahrzeuglängsmittenachse in eine Position gemäß Anspruch 3 gelegt werden. Bei dieser Position ist der Spurstangen-Lenker unter einem Winkel von nahezu 90° zur vertikalen Radmittenlängsebene angeordnet. Hierdurch ergibt sich zwischen der senkrechten Radmittenquerebene und dem Spurstangen-Lenker ein größerer Hebelarm als bei einer Anstellung des Spurstangen-Lenkers bei nicht gelenkten Hinterrädern.

Insbesondere ist der Spurstangen-Lenker etwa in einer gleichen horizontalen Ebene mit dem radträgerseitigen Gelenk des Dreieckslenkers angeordnet und im Gelenk eines nach innen ragenden Armes des Radträgers gehalten, wobei das Gelenk zwischen den aufbauseitigen und den radträgerseitigen Gelenken der beiden Anlenkungen angeordnet wird. Durch diese Lage des dem Rad zugeordneten Gelenks am Arm des Radträgers, kann gleichzeitig das Federbein mit seinem unteren Ende gelagert werden, wobei der Spurstangen-Lenker und das Federbein auf einer gemeinsamen Achse gehalten sind.

Die von den aufbauseitigen Gelenken gebildeten Lenkerdrehachsen der beiden Anlenkungen sind in der Weise angeordnet, daß die eine Lenkerdrehachse der oberen Anlenkung näher an der senkrechten Längsmittenebene des Rades als die weitere Lenkerdrehachse der unteren Anlenkung angeordnet ist. Beide Drehachsen sind - in bezug auf die Draufsicht und in Fahrtrichtung gesehen - schräg von außen nach innen vorn zur Fahrzeuglängsmittenachse verlaufend und zueinander unter einem spitzen Öffnungswinkel angeordnet. Diese geringe Verschränkung der Lenkerdrehachsen der beiden Anlenkungen zueinander ist bei Einfederungsbewegungen für eine geringe Vorspuränderung ausgelegt. Die obere und die untere Anlenkung sind in den Schrägebenen mit den Lenkerdrehachsen derart unter einem Öffnungswinkel zueinander - in bezug auf die Fahrtrichtung - nach vorn innen verlaufend angestellt, daß ein Antisquat über den Einfederweg des Fahrzeugs bei Antriebskräften und Lastwechsel erhöht wird. Diese Wirkung wird durch Bewegung des über die beiden Anlenkungen gehaltenen Rades mit seiner Raddrehachse beim Einfedern auf einer progressiven Kurvenbahn erreicht, die - in bezug auf die Fahrtrichtung - nach hinten ansteigend ist und die Raddrehachse sich auf dieser Kurvenbahn bewegt. Das über dem Einfederweg ansteigende Antisquat ändert durch die positiven und negativen Abntriebskräfte (Beschleunigen und Lastwechsel) die Wankmomentenverteilung von der Vorderachse und Hinterachse. Beim Beschleunigen übernimmt die Hinterachse des Fahrzeugs einen größeren Anteil der Wankmomentenverteilung, beim Lastwechsel wird dieser Anteil kleiner, was zu einer Untersteuertendenz beim Lastwechsel führt.

Desweiteren verlaufen die Lenkerdrehachsen in Schrägebenen so zueinander, daß sich ein - in bezug auf die Fahrtrichtung - vor der Raddrehachse liegende Nickpol ergibt. Durch diese Position des Nickpols, welche sich aufgrund der Lage der oberen und unteren Anlenkung sowie deren Gelenke zueinander ausbildet, wird eine lineare Antidive-Wirkung über den Federweg erzielt. Der Radaufstandspunkt kann sich somit bei einer Bremsung geradlinig unter einem Winkel zur Radaufstandsfläche nach hinten bewegen. Hierdurch wird in vorteilhafter Weise ein Kompromiß zwischen Untersteuerungstendenz beim Bremsen und einer möglichst geringen Ausfederung der Hinterachse erreicht.

Das Federbein ist - in bezug auf die Seitenansicht - annähernd parallel zur senkrechten Radmittenquerebene angeordnet und stützt sich hinter dieser Ebene - in bezug auf die Fahrtrichtung - am Radträger ab. Desweiteren erstreckt sich das Federbein zwischen dem Spurstangen-Lenker und dem unteren Dreieckslenkern einerseits und zwischen den beiden oberen Einzellenkern andererseits und ist annährend vertikal zur Radaufstandsebene eingestellt. Hierdurch wird im Zusammenspiel mit den beiden Anlenkungen eine günstige Federübersetzung erzielt, da die untere Anlenkung des Federbeines relativ nahe zum Rad angeordnet ist. Die senkrechte Lage des Federbeines - in Seitenansicht gesehen - sowie die Anordnung zwischen unterem Querlenker und dem Spurstangen-Lenker ergibt in vorteilhafter Weise bei Federungsvorgängen keine Radstandsänderungen in Richtung Vor- und Nachspur.

Der Spurstangen-Lenker ist etwa in einer horizontalen Ebene mit der unteren Anlenkung gelegen, so daß eine Verwendung der erfindungsgemäßen Radaufhängung auch für Fahrzeuge mit einem Heckmotor und Allradlenkung gut geeignet ist. Die erfindungsgemäße Radaufhängung kann mit ihren Anlenkungen über Gelenke sowohl an einem Fahrschemel als auch am Fahrzeugaufbau abgestützt sein. Der Fahrschemel ist über elastische Elemente am Fahrzeugaufbau abgestützt.

Der Dreieckslenker wird aufgrund seiner Anordnung nur auf Zug und Druck beansprucht, so daß eine Verbindungsstrebe zwischen den Lenkern entfallen kann und ein sogenannter offener Dreieckslenker verwendet wird, der leichtbauend ist.

Ein Ausführungsbeispiel der Erfindung ist in der Zeichnung dargestellt und wird im nachfolgenden näher beschrieben.

Es zeigen:

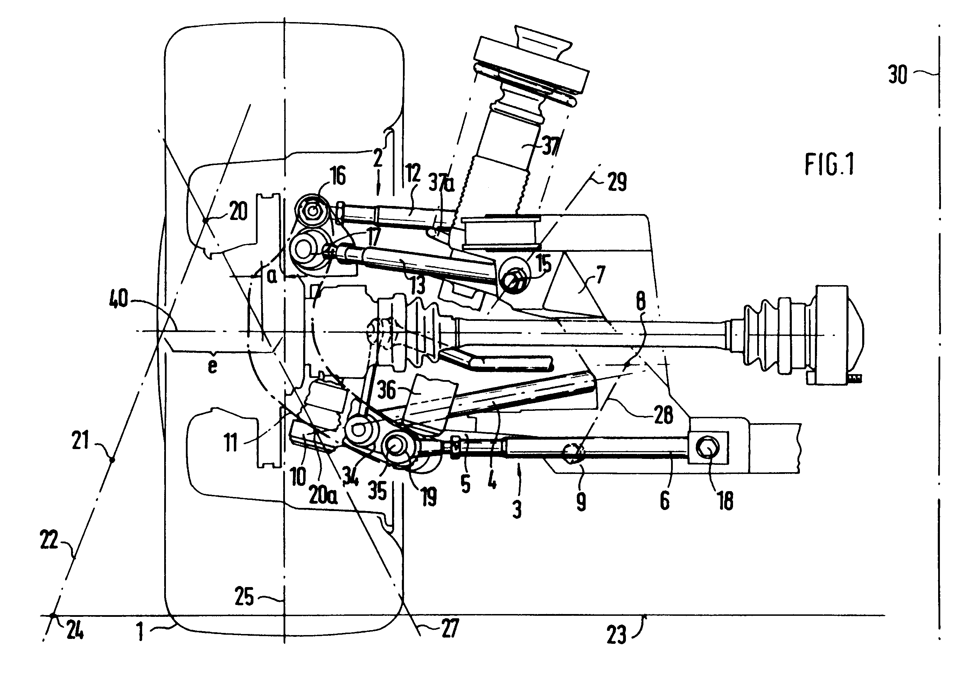

- Fig. 1: eine Vorderansicht einer Radaufhängung mit einer oberen Anlenkung, aus zwei Einzellenkern und einer unteren Anlenkung aus einem Dreieckslenker mit Spurstangen-Lenker,
- Fig. 2: eine Seitenansicht der Radaufhängung gemäß Fig. 1
- Fig. 3: eine Draufsicht auf die Radaufhängung gemäß Fig. 1, und

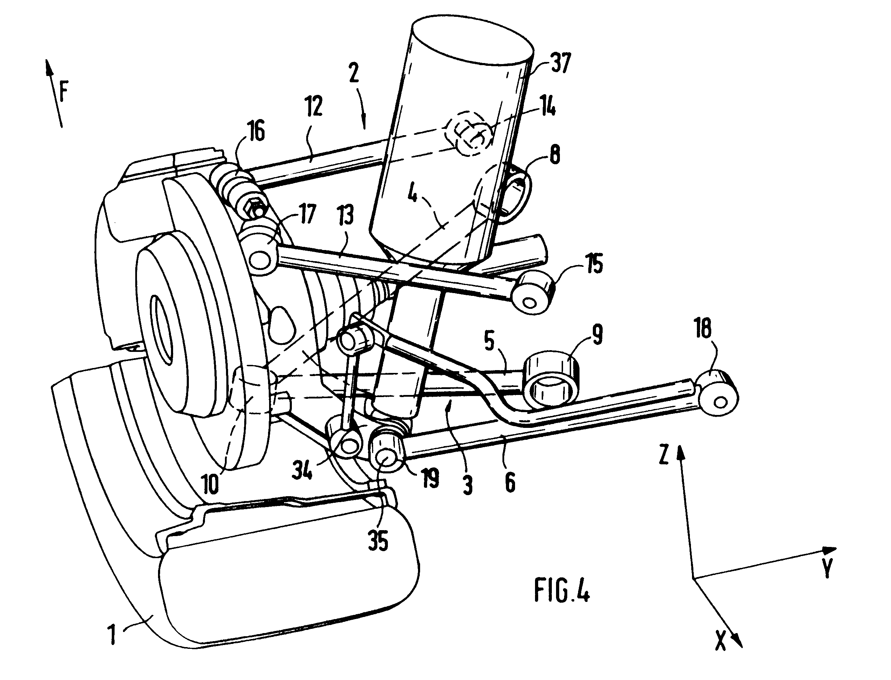

- Fig. 4: eine schaubildliche Darstellung der Radaufhängung.

Die Radaufhängung für die angetriebenen Hinterräder 1 eines Kraftfahrzeugs umfaßt in übereinanderliegenden Schrägebenen X-X und Y-Y angeordnete Anlenkungen 2 und 3. Die in der unteren Ebene X-X angeordnete Anlenkung 3 besteht aus einem Dreieckslenker mit zwei unmittelbar verbundenen Lenkern 4 und 5 und einem Spurstangen-Lenker 6. Über am Fahrzeugaufbau 7 gehaltene Gelenke 8 und 9 und einem Gelenk 10 am Radträger 11 ist das Fahrzeugrad 1 in der Ebene X-X geführt. Die in der oberen Ebene Y-Y angeordnete weitere Anlenkung 2 umfaßt zwei Einzellenker 12 und 13, die an dem Aufbau 7 über jeweils ein Gelenk 14 und 15 und am Radträger 11 über weitere Gelenke 16 und 17 abgestützt sind.

Der Spurstangen-Lenker 6 ist - in bezug auf die Fahrtrichtung F - hinter der unteren Anlenkung 3 angeordnet und weist ein aufbauseitiges Gelenk 18 und ein radträgerseitiges Gelenk 19 auf.

Die Längsachsen der Lenker 4 und 5 der unteren Anlenkung 3 sowie die Längsachsen der Einzellenker 12 und 13 der oberen Anlenkung 2 bilden Schnittpunkte 20 und 21, welche eine elastokinematische Schwenkachse 22 bestimmen. Diese weist einen Durchstoßpunkt in der Radaufstandsebene 23 auf, der einen Radlenkpol 24 bildet. Dieser ist außerhalb der senkrechten Radmittenlängsebene 25 und - in bezug auf die Fahrtrichtung - hinter der senkrechten Radmittenquerebene 26 gelegen. Er ist in einem kleineren Abstand b zur senkrechten Radmittenquerebene 26 angeordnet als zur senkrechten Radmittenlängsebene 25 mit dem Abstand d.

Eine kinematische Radschwenkachse 27 die im wesentlichen bei lenkbaren Hinterrädern zur Wirkung kommt, verläuft durch den durch die Längsachse der Einzellenker 12 und 13 gebildeten Schnittpunkt 20 sowie durch das Zentrum des einzigen radträgerseitigen Gelenkes 10 der unteren Anlenkung 3.

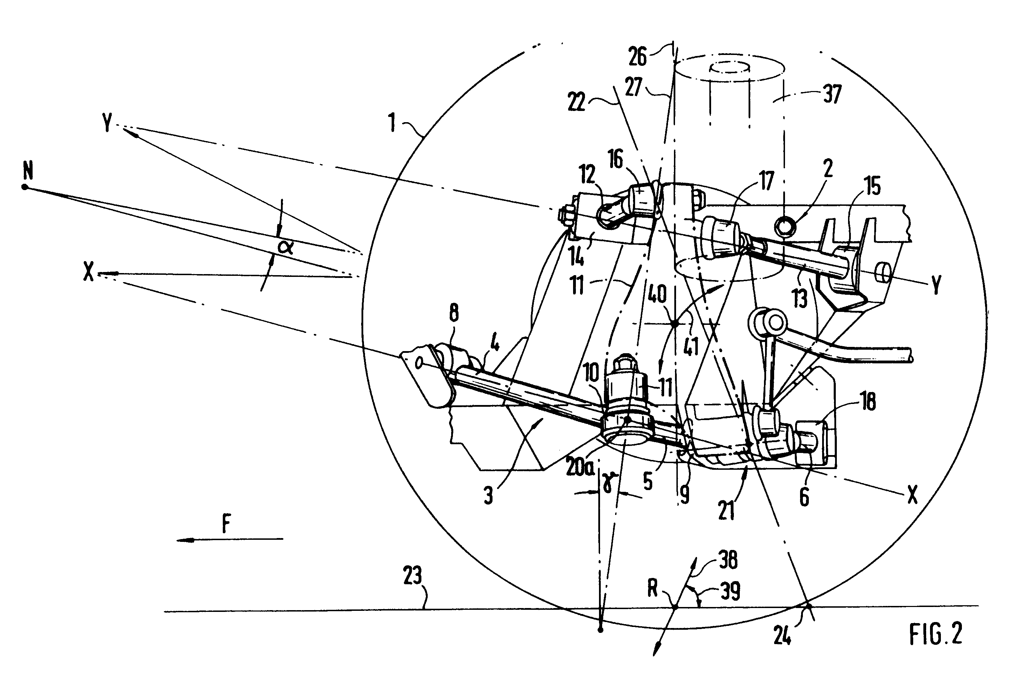

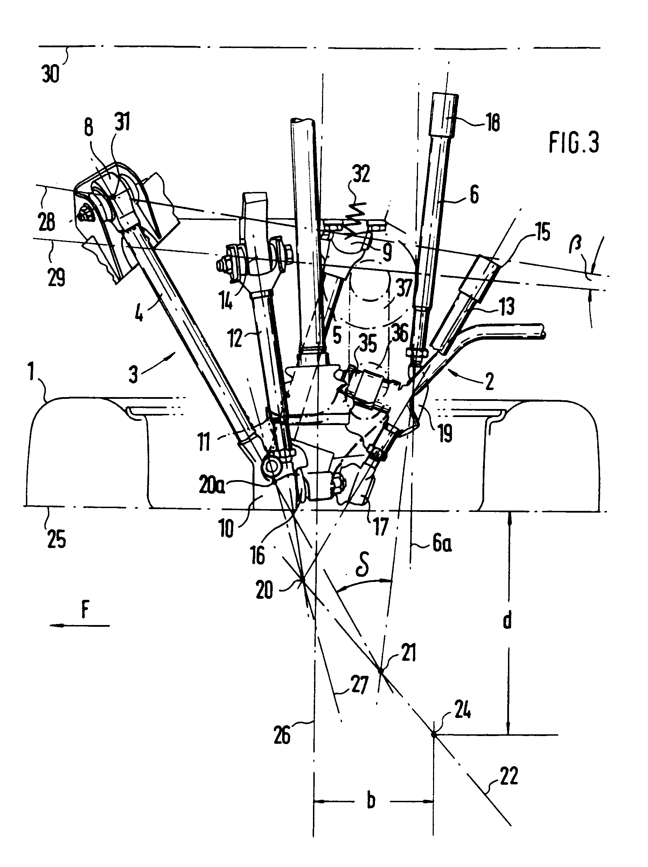

Die beiden Anlenkungen 2 und 3 sind - mit bezug auf die Fahrtrichtung F - in schräg nach vorn ansteigend verlaufenden schiefen Ebenen X-X und Y-Y angeordnet und wie in Fig. 2 näher gezeigt, zueinander unter einen Winkel α angestellt. In diesen Ebenen X-X und Y-Y bilden sich über die aufbauseitigen Gelenke 8, 9 und 14, 15 beabstandete Lenkerdrehachsen 28 und 29. Diese stehen gemäß Fig. 2 und - in Fahrtrichtung F gesehen - unter unterschiedlich großen Winkeln zur Radaufstandsfläche 23 und sind gemäß Fig. 3 verschränkt unter einem Winkel β zueinander angeordnet. Insbesondere ist die obere Anlenkung 2 so ausgebildet, daß ihre Lenkerdrehachse 29 näher an der senkrechten Radmittenlängsebene 25 liegt, als die weitere Lenkerdrehachse 28 der weiteren Anlenkung 3. Der Verlauf dieser Lenkerdrehachsen 28 und 29 (Fig. 3) ist so gewählt, daß sie schräg von außen nach innen vorn zur Fahrzeuglängsmittenachse 30 verlaufen und zueinander unter dem spitzen Öffnungswinkel β angeordnet sind bzw. die durch die Lenkerdrehachsen 28 und 29 gelegten senkrechten Ebenen unter einem spitzen Öffnungswinkel angeordnet sind. Dieser Winkel öffnet sich in Fahrtrichtung F.

Die untere Anlenkung 3 ist über Gelenke 8 und 9 unterschiedlicher radialer Kennung am Fahrzeugaufbau 7 bzw. an einem Fahrschemel (der nicht gezeigt ist) gehalten. Das - in bezug auf die Fahrtrichtung F - vornliegende Lager 8 des Lenkers 4 ist radial so hart ausgebildet, daß es quasi eine vertikale Drehachse 31 bzw. einen Drehpunkt bildet, um die der Dreieckslenker 3 gegenüber seinem weiteren Lager 9 des Lenkers 5 verschwenkbar wird. Dieses Lager 9 weist hierzu eine relativ weiche radiale Kennung 32 auf. Die obere Anlenkung 2 weist dagegen Lager 14 und 15 mit relativ harter radialer Kennung auf, wobei das Lager 15 des Einzellenkers 13 weicher ausgeführt ist als das vordere Gelenk 14 aber wesentlich härter als das Gelenk 9 des unteren Lenkers 5. Auch das aufbauseitige Gelenk 18 des Spurstangen-Lenkers 6 ist in radialer Richtung hart ausgebildet. Hierdurch wird ein Verschwenken der Radaufhängung bei Verlagerung des Lenkers im wesentlichen um die Schwenkachse 22 möglich.

Der Dreieckslenker 3 ist über das einzige Gelenk 10 am Radträger 11 gelagert, welches mit annähernd gleichen Abständen zur senkrechten Radmittenquerebene 26 und zur Radmittenlängsebene 25 angeordnet ist. Dieses Gelenk 10 bildet auch einen ersten Schnittpunkt 20a für die kinematische Schwenkachse 27. Ein zweiter Schnittpunkt 20 wird von der oberen Anlenkung 2 und zwar durch die sich schneidenden Längsachsen der Einzellenker 12 und 13 gebildet. Die durch diese Schnittpunkte 20 und 20a verlaufende kinematische Schwenkachse 27 verläuft in bezug auf die Seitenansicht Fig. 2 von der Radaufstandsfläche 23 schräg nach hinten oben entgegen der Fahrtrichtung F. Durch die Lage der Schnittpunkte 20 und 20a ist die Schwenkachse 27 vor der senkrechten Radmittenquerebene 27 gelegen. Es ergibt sich hierdurch ein positiver Rad-Nachlaufwinkel Γ und ein negativer Störkrafthebelarm a. Diese kinematische Schwenkachse ist insbesondere wirksam, wenn die erfindungsgemäße Radaufhängung für lenkbare Hinterräder verwendet wird.

Die durch die aufbauseitigen Gelenke 14 und 15 und die radträgerseitigen Gelenke 16 und 17 bestimmten Längsachsen der Einzellenker 12 und 13 der oberen Anlenkung 2 bilden auch den oberen Schnittpunkt 20 für die elastokinematische Schwenkachse 22, welche durch die von den Längsachsen des vornliegenden Lenkers 4 der unteren Anlenkung 3 und durch die Längsachse des Spurstangen-Lenkers 6 gebildeten unteren Schnittpunkt 21 verläuft. Zur Anordnung dieser elastokinematischen Schwenkachse 22 mit dem Radlenkpol 24 relativ weit (Abstand d) außerhalb der senkrechten Radmittenlängsebene 25 und mit dem kleineren Abstand b zur senkrechten Radmittenquerebene 26 ist der vornliegende Lenker 4 mit einem größeren Winkel zur senkrechten Radmittenquerebene 26 angeordnet als der Spurstangenlenker 6.

Die elastokinematische Schwenkachse 22 verläuft gemäß Fig. 2 von hinter der senkrechten Radmittenquerebene 26 gelegenen Lenkpol 24 schräg nach vorn durch den oberen Schnittpunkt 20 der Längsachsen derEinzellenker 12 und 13. Diese sind hierzu näher zur senkrechten Radmittenlängsebene 25 und mit etwa einem gleichen Abstand zur Radmittenquerebene 26 angeordnet. Da die beiden Einzellenker 12 und 13 mit relativ großer Basis aufbauseitig in den Gelenken 14 und 15 abgestützt sind, ergibt sich in Höhe der Raddrehachse 40 zwischen der elastokinematischen Schwenkachse 22 und der senkrechten Radmittenlängsebene 25 ein großer Abstand e.

Der Spurstangen-Lenker 6 erstreckt sich gemäß Fig. 3 und in Fahrtrichtung gesehen mit einer Neigung von ca. < 10° schräg von außen vorn nach innen hinten zur Fahrzeuglängsmittenachse 30. Er ist etwa in einer gleichen Ebene mit der unteren Anlenkung 3 angeordnet und mit seinem Gelenk 19 an einem nach innen ragenden Arm 34 des Radträgers 11 abgestützt.

Dieses Gelenk 19 des Lenkers 6 ist auf einer Achse 35 eines Bolzens gehalten, der gleichzeitig eine untere Lagerung 36 für ein Federbein 37 bildet. Hierzu ist das Gelenk 19 zwischen den aufbauseitigen und den radträgerseitigen Gelenken der beiden Anlenkungen 2 und 3 angeordnet. In bezug auf das radträgerseitige Gelenk 10 des Dreieckslenkers 3 ist das Gelenk 19 weiter entfernt zur senkrechten Radmittenlängsebene 25 angeordnet als das Gelenk 10 der unteren Anlenkung 3.

Der Spurstangen-Lenker 6 kann für nicht lenkbare Hinterräder 1 sowie für lenkbare Hinterräder gleichermaßen verwendet werden. Bei lenkbaren Hinterrädern wird die gleiche Spurstange 6 verwendet, aber die Lage der Spurstange 6a zum Lenken wird so ausgerichtet, daß diese nahezu in einem Winkel von 90° zur senkrechten Radmittenlängsebene 25 steht, was strichpunktiert in Fig. 3 gezeigt ist. Es ergibt sich hierdurch ein größerer Hebelarm zum Lenken der Räder. Der zwischen den Spurstangen-Lenkern 6a zum Lenken erforderliche Stellzylinder ist nicht eingezeichnet.

Wie in Fig. 2 näher dargestellt, bildet sich durch die Schräganstellung der Lenkerdrehachsen 28 und 29 unter dem Winkel α zueinander ein vornliegender Nickpol N für einen Antidive. Hierbei wird sich bei Bremsung der Radaufstandspunkt R auf der geraden Strecke 38 (Fig. 2) linear bewegen, die sich unter einem Winkel 39 zur Radaufstandsfläche 23 - in bezug auf die Fahrtrichtung F - nach hinten erstreckt.

Zur Erzielung eines progressiven Antisquat wird die Raddrehachse 40 durch Antriebskräfte bei Einfederbewegungen auf einer - in bezug auf die Fahrtrichtung - nach hinten gekrümmten Kurvenbahn 41 bewegen, was in Fig. 2 näher dargestellt ist.

Das Federbein 37 mit umgebender Spiralfeder 37a ist gemäß Fig. 2 annähernd parallel zur senkrechten Radmittenquerebene 26 angeordnet und stützt sich hinter dieser Ebene am Arm 34 des Radträgers 11 ab. Er erstreckt sich zwischen dem Spurstangen-Lenker 6; 6a und dem unteren Dreieckslenker 3 einerseits und zwischen den beiden oberen Einzellenkern 12 und 13 andererseits und ist annähernd senkrecht zur Radaufstandsfläche 23 ausgerichtet. Insgesamt wird sich bei Federungsbewegungen des Rades 1 durch die beiden Anlenkungen 2 und 3 sowie durch das Federbein 37 beim Einfedern eine kleinere Radstellungsänderung in Richtung Vorspur einstellen als beim Ausfedern in Richtung Nachspur.

Die beiden Anlenkungen 2 und 3 können über ihre Gelenke 14, 15 und 8, 9 sowohl am Fahrzeugaufbau, wie dargestellt, als auch an einem Fahrschemel was nicht dargestellt ist angelenkt sein. Die Wirkung auf das Rad bei allen Fahrzuständen auch im Zusammenhang mit Umfangs- und Seitenkräften bleibt unverändert.

## Patentansprüche

1. Radaufhängung für die angetriebenen Hinterräder (1) eines Kraftfahrzeuges mit einem über ein Federbein (37) aufbauseitig abgestützten Radträger (11), der über zwei eine obere Anlenkung (2) bildende Einzellenker (12, 13) und einer aus einem Dreieckslenker (Lenker 4, 5) mit einer etwa in Fahrzeugquerrichtung verlaufenden Spurstangen-Lenker (6) bestehenden unteren Anlenkung (3) geführt ist, wobei die Anlenkungen (2, 3) aufbauseitig in Gelenken (8, 9 und 14, 15) unterschiedlicher radialer Kennung abgestützt sind und wobei die Einzellenker (12, 13) in Fahrzeugquerrichtung divergierend angeordnet und in zwei beabstandeten Gelenken (16, 17) des Radträgers (11) gelagert sind und der Dreieckslenker (Lenker 4, 5) über ein Gelenk (10) am Radträger (11) gehalten ist und beide Anlenkungen (2 und 3) eine an der Radaußenseite gelegene elastokinematische Radschwenkachse (22) mit einer - in bezug auf die Fahrtrichtung (F) - hinter einer senkrechten Radmittenquerebene (26) und außerhalb der senkrechten Radmittenlängsebene (25) liegenden Lenkpol (24) in der Radaufstandsebene (23) bilden, **dadurch gekennzeichnet**, daß die beiden Anlenkungen (2, 3) - mit Bezug auf die Fahrtrichtung (F) - in schräg nach vorn ansteigend verlaufenden schiefen Ebenen (X-X und Y-Y) angeordnet und zueinander unter einem Winkel (α) angestellt sind und in diesen Ebenen durch die aufbauseitigen Gelenke (8, 9 und 14, 15) der beiden Anlenkungen (3 und 2) beabstandete Lenkerdrehachsen (28 und 29) gebildet werden, die in Seitenansicht und in Fahrtrichtung (F) gesehen unter unterschiedlich großen Winkeln zur Radaufstandsfläche (23) stehen und - in Draufsicht gesehen - zueinander verschränkt unter einem Winkel (β) angeordnet sind, und daß die den beiden Lenkerdrehachsen (28, 29) gegenüberliegenden radträgerseitigen Gelenke (10, 16 und 17) der beiden Anlenkungen (3, 2) nahe einer senkrechten Radmittenquerebene (26) und unmittelbar benachbart einer senkrechten Radmittenlängsebene (25) liegen und daß die aufbauseitigen Gelenke (8, 9 und 14, 15) der beiden Anlenkungen (3 und 2) eine zum Verschwenken in Richtung Vorspur um das vornliegende Gelenk (8) der unteren Anlenkung (3) unterschiedlich definierte radiale Kennung aufweisen.

2. Radaufhängung für die angetriebenen Hinterräder (1) eines Kraftfahrzeugs mit einer an der Radinnenseite verlaufenden kinematischen Schwenkachse (27) sowie einer an der Radaußenseite gelegenen elastokinematischen Radschwenkachse (22) nach Anspruch 1, **dadurch gekennzeichnet**, daß zwischen den Spurstangen-Lenkern (6, 6a) jeder Radseite eine Stelleinrichtung für eine Hinterradlenkung angeordnet ist, die jeweils mit den freien inneren Enden (18) der Spurstangen-Lenker (6, 6a) verbunden ist und diese sich unter jeweils einem Winkel von nahezu 90° zur senkrechten Radmittenlängsebene (25) erstrecken.

3. Radaufhängung nach den Ansprüchen 1 oder 2, **dadurch gekennzeichnet**, daß die obere und untere Anlenkung (2, 3) an einem Fahrschemel gehalten sind, der am Fahrzeugaufbau elastisch abgestützt ist.

4. Radaufhängung nach einem oder mehreren der vorhergehenden Ansprüche, **dadurch gekennzeichnet**, daß der Dreieckslenker der unteren Anlenkung (3) einen - in bezug auf die Fahrtrichtung (F) -hintenliegenden Lenker (5) mit einem aufbauseitigen Gelenk (9) weicherer radialer Kennung (32) als ein weiteres aufbauseitiges Gelenk (8) des vornliegenden Einzellenkers (4) aufweist.

5. Radaufhängung nach einem oder mehreren der vorhergehenden Ansprüche, dadurch gekennzeichnet, daß der vornliegende Lenker (4) der unteren Anlenkung (3) in einem elastischen Gelenk (8) gehalten ist, das eine zum Verschwenken ausgebildete vertikale Drehachse (31) umfaßt.

6. Radaufhängung nach einem oder mehreren der vorhergehenden Ansprüche, dadurch gekennzeichnet, daß die untere Anlenkung (3) aus einem offenen Dreieckslenker ohne Querstrebe gebildet ist.

7. Radaufhängung nach einem oder mehreren der vorhergehenden Ansprüche, dadurch gekennzeichnet, daß das aufbauseitige Gelenk (9) des hintenliegenden Lenkers (5) der unteren Anlenkung (3) mit einer weicheren radialen Kennung (32) ausgeführt ist als alle übrigen aufbauseitigen Gelenke (8, 14 und 15) beider Anlenkungen (2 und 3).

8. Radaufhängung nach einem oder mehreren der vorhergehenden Ansprüche, dadurch gekennzeichnet, daß die eine Lenkerdrehachse (29) der oberen Anlenkung (2) näher an der senkrechten Radmittenlängsebene (25) als die weitere Lenkerdrehachse (28) der unteren Anlenkung (3) angeordnet ist und daß beide Lenkerdrehachsen (29 und 28) - in bezug auf die Draufsicht und in Fahrtrichtung (F) gesehen - schräg von außen nach innen vorn zur Fahrzeuglängsmittenachse (30) verlaufen und zueinander unter einem spitzen Öffnungswinkel (β) angeordnet sind.

9. Radaufhängung nach Anspruch 2 und einem oder mehreren der vorhergehenden Ansprüche, dadurch gekennzeichnet, daß das radträgerseitige Gelenk (10) des Dreieckslenkers (3) mit annähernd gleichen Abständen zur senkrechten Radmittenquer- und Längsebene (26 und 25) angeordnet ist und daß durch dieses Gelenk (10) und durch einen von den Einzellenkern (12, 13) der oberen Anlenkung (2) gebildeten Schnittpunkt (20) die kinematische Schwenkachse (27) mit einem positiven Rad-Nachlaufwinkel (Γ) und einem negativem Störkrafthebelarm (a) verläuft.

10. Radaufhängung nach einem oder mehreren der vorhergehenden Ansprüche, dadurch gekennzeichnet, daß die kinematische Schwenkachse (27) - in bezug auf die Seitenansicht - von der Radaufstandsfläche (23) schräg nach hinten oben und entgegen der Fahrtrichtung (F) verläuft.

11. Radaufhängung nach Anspruch 10, dadurch gekennzeichnet, daß die kinematische Schwenkachse (27) vor der senkrechten Radmittenquerebene (26) angeordnet ist.

12. Radaufhängung nach einem oder mehreren der vorhergehenden Ansprüche, dadurch gekennzeichnet, daß der vornliegende Lenker (4) der unteren Anlenkung (3) zum Spurstangen-Lenker (6) unter einem derartigen Spreizwinkel angeordnet ist, daß sich der Lenkpol (24) der elastokinematischen Schwenkachse (22) außerhalb der senkrechten Radmittenlängsebene (25) und hinter der senkrechten Radmittenquerebene (26) derart einstellt, daß der Abstand (d) zur Radmittenlängsachse (25) größer ist als der Abstand (b) zur Radmittenquerebene (26).

13. Radaufhängung nach einem oder mehreren der vorhergehenden Ansprüche, dadurch gekennzeichnet, daß die elastokinematische Schwenkachse (22) - in Seitenansicht gesehen - vom hinter der senkrechten Radmittenquerebene (26) gelegenen Lenkpol (24) in der Radaufstandsfläche (23) schräg nach vorn - in bezug auf die Fahrtrichtung (F) - verläuft und diese Radmittenquerebene (26) etwa in Höhe des radträgerseitigen Gelenks (17) des hintenliegenden Einzellenkers (13) der oberen Anlenkung (2) schneidet.

14. Radaufhängung nach einem oder mehreren der vorhergehenden Ansprüche, dadurch gekennzeichnet, daß das radträgerseitige Gelenk (10) des Dreiecklenkers (3) vor der Radmittenquerebene (26) näher zur senkrechten Radmittenlängsebene (25) angeordnet ist, als das entsprechende Gelenk (19) des Spurstangen-Lenkers (6, 6a) hinter der Radmittenquerebene (26).

15. Radaufhängung nach einem oder mehreren der vorhergehenden Ansprüche, dadurch gekennzeichnet, daß der Spurstangen-Lenker (6; 6a) etwa in einer gleichen horizontalen Ebene mit dem radträgerseitigen Gelenk (10) des Dreieckslenkers (3) angeordnet ist und im Gelenk (19) eines nach innen ragenden Armes (34) des Radträgers (11) gehalten ist und daß dieses Gelenk (19) zwischen den aufbauseitigen und den radträgerseitigen Gelenken der beiden Anlenkungen (2, 3) und wesentlich näher zu den radträgerseitigen Gelenken (10, 16 und 17) als zu den aufbauseitigen Gelenken (8, 9 und 14, 15) angeordnet ist.

16. Radaufhängung nach Anspruch 15, dadurch gekennzeichnet, daß das radträgerseitige Gelenk (19) der Spurstange (6; 6a) und ein unteres Gelenk des Federbeines (37) auf einer gemeinsamen Achse (35) angeordnet und mit dem nach innen ragenden Arm (34) des Radträgers (11) verschraubt ist.

17. Radaufhängung nach Anspruch 16, dadurch gekennzeichnet, daß der Spurstangen-Lenker (6) - in Draufsicht und in Fahrtrichtung (F) gesehen - sich schräg von außen vorn nach innen hinten zur Fahrzeuglängsmittenachse (30) erstreckt.

18. Radaufhängung nach einem oder mehreren der vorhergehenden Ansprüche, dadurch gekennzeichnet, daß die beiden Einzellenker (12, 13) der oberen Anlenkung (2) mit relativ großer Basis aufbauseitig in den Gelenken (14 und 15) abgestützt sind und einen derartigen Spreizwinkel zueinander aufweisen, daß die elastokinematische Schwenkachse (22) in einer durch die Raddrehachse (40) gelegten horizontalen Ebene zur senkrechten Radmittenlängsebene (25) mit einem relativ großen Abstand (e) verläuft.

19. Radaufhängung nach einem oder mehreren der vorhergehenden Ansprüche, dadurch gekennzeichnet, daß die radträgerseitigen Gelenke (16, 17) der beiden Einzellenker (12, 13) der oberen Anlenkung (2) etwa mit gleichem Abstand zur senkrechten Radmittenquerebene (16) angeordnet sind und daß das aufbauseitige Gelenk (14) des Einzellenkers (12) näher an der senkrechten Radmittenquerebene (26) liegt als das Gelenk (15) des weiteren Einzellenkers (13).

20. Radaufhängung nach einem oder mehreren der vorhergehenden Ansprüche, dadurch gekennzeichnet, daß das aufbauseitige Gelenk (15) des hintenliegenden Einzellenkers (13) der oberen Anlenkung (2) eine weichere Kennung in radialer Richtung aufweist als das aufbauseitige Gelenk (14) des weiteren Einzellenkers (12), aber eine härtere radiale Kennung besitzt als das aufbauseitige Gelenk (9) des hintenliegenden Lenkers (5) der unteren Anlenkung (3).

21. Radaufhängung nach einem oder mehreren der vorhergehenden Ansprüche, dadurch gekennzeichnet, daß die in der jeweiligen Ebene (X-X und Y-Y) angeordnete obere und untere Anlenkung (2 und 3) in der Seitenansicht derart schräg zueinander angestellt und um die von den aufbauseitigen Gelenken (8, 9 und 14, 15) gebildeten Lenkerdrehachsen (28, 29) verschwenkbar sind, daß sich ein - in bezug auf die Fahrtrichtung (F) - vor der Raddrehachse (40) liegender Nickpol (N) für einen "Antidive" mit einer geradlinigen Bewegung des Radaufstandspunktes (R) über einen Federweg ausbildet.

22. Radaufhängung nach Anspruch 21, dadurch gekennzeichnet, daß der Radaufstandspunkt (R) eine geradlinige Bewegungsrichtung unter einem Winkel (39) zur Radaufstandsfläche (23) und - in bezug auf die Fahrtrichtung (F) - schräg nach hinten verlaufend, aufweist.

23. Radaufhängung nach einem oder mehreren der vorhergehenden Ansprüche, dadurch gekennzeichnet, daß die in der jeweiligen Ebene (X-X und Y-Y) angeordnete obere und untere Anlenkung (3 und 2) - in bezug auf die Seitenansicht - so zueinander angestellt sind, daß sich zur Erzielung eines progressiven "Antisquat" die Raddrehachse (40) beim Einfedern progressiv auf einer Kurvenbahn (41) - in bezug auf die Fahrtrichtung (F) - nach hinten bewegt.

24. Radaufhängung nach einem oder mehreren der vorhergehenden Ansprüche, dadurch gekennzeichnet, daß die beiden Anlenkungen (2 und 3) derart zueinander angestellt und aufbauseitig gelagert sind, daß das Rad (1) beim Einfedern eine kleinere Radstellungsänderung in Richtung Vorspur aufweist als beim Ausfedern in Richtung Nachspur.

25. Radaufhängung nach einem oder mehreren der vorhergehenden Ansprüche, dadurch gekennzeichnet, daß das Federbein (37) - in bezug auf die Seitenansicht - annähernd parallel zur senkrechten Radmittenquerebene (26) angeordnet und sich hinter dieser Ebene - in bezug auf die Fahrtrichtung (F) - am Radträger (11) abstützt, wobei sich das Federbein (37) sich zwischen dem Spurstangen-Lenker (6; 6a) und dem unteren Dreieckslenker (3) einerseits und zwischen den beiden oberen Einzellenkern (12, 13) der oberen Anlenkung (2) erstreckt, wobei das Federbein (37) annähernd senkrecht zur Radaufstandsebene (23) angestellt ist.

## Claims

1. A wheel suspension for the driven rear wheels (1) of a motor vehicle, having a wheel support (11) which is supported on the body by way of a shock-absorbing leg (37) and guided by way of two individual support arms (12, 13) forming an upper articulation (2) and a lower articulation (3) comprising a triangular support arm (support arms 4, 5) with a track-rod support arm (6) extending substantially in the transverse direction of the vehicle, wherein the articulations (2, 3) are supported on the body in joints (8, 9 and 14, 15) of different radial characteristics and wherein the individual support arms (12, 13) are arranged diverging in the transverse direction of the vehicle and are mounted in two spaced joints (16, 17) of the wheel support (11) and the triangular support arm (support arms 4, 5) is held on the wheel support (11) by way of a joint (10) and the two articulations (2 and 3) form an elastokinematic wheel pivot axle (22) positioned on the outside of the wheel with a steering axis (24) situated outside the vertical median longitudinal plane (25) of the wheel and behind a vertical median transverse plane (26) of the wheel - with respect to the direction of travel (**F**) - in the contact plane (23) of the wheel, **characterized in that** the two articulations (2, 3) are arranged in inclined planes (**X-X** and **Y-Y**) extending obliquely forwards and upwards - with respect to the direction of travel (**F**) - and are set at an angle (**α**) with respect to each other, and spaced axes of rotation (28 and 29) of the support arms are formed in the said planes by the joints (8, 9 and 14, 15) of the two articulations (3 and 2) on the body, the said axes of rotation (28 and 29) being at different angles to the contact plane (23) of the wheel as viewed from the side and in the direction of travel (**F**) and are arranged crossing each other at an angle (**β**) as seen in plan view, and the joints (10, 16 and 17) of the two articulations (3, 2) on the wheel supports and opposite the two axes of rotation (28, 29) of the support arms are arranged close to a vertical median transverse plane (26) of the wheel and directly adjacent to a vertical median longitudinal plane (25) of the wheel, and the joints (8, 9 and 14, 15) of the two articulations (3 and 2) on the body have a radial characteristic defined differently for pivoting in the toe-in direction about the front joint (8) of the lower articulation (3).

2. A wheel suspension for the driven rear wheels (1) of a motor vehicle having a kinematic pivot axle (27) extending along the inside of the wheel and an elastokinematic wheel pivot axle (22) situated on the outside of the wheel, according to Claim 1, **characterized in that** the track-rod support arms (6, 6a) on each side of the wheel have arranged therebetween a setting device for a rear-wheel steering mechanism connected respectively to the free inner ends (18) of the track-rod support arms (6, 6a) which extends respectively at an angle of almost 90° to the vertical median longitudinal plane (25) of the wheel.

3. A wheel suspension according to Claim 1 or 2, **characterized in that** the upper and lower articulations (2, 3) are held on a subframe supported resiliently on the vehicle body.

4. A wheel suspension according to one or more of the preceding Claims, **characterized in that** the triangular support arm of the lower articulation (3) has a rear support arm (5) - with respect to the direction of travel (**F**) - with a joint (9) on the body of weaker radial characteristic (32) than a further joint (8), on the body, of the front individual support arm (4).

5. A wheel suspension according to one or more of the preceding Claims, **characterized in that** the front support arm (4) of the lower articulation (3) is held in a resilient joint (8) comprising a vertical axis of rotation (31) constructed for pivoting.

6. A wheel suspension according to one or more of the preceding Claims, **characterized in that** the lower articulation (3) is formed from an open triangular support arm without a transverse strut.

7. A wheel suspension according to one or more of the preceding Claims, **characterized in that** the joint (9), on the body, of the rear support arm (5) of the lower articulation (3) is constructed with a weaker radial characteristic (32) than all the other joints (8, 14 and 15), on the body, of the two articulations (2 and 3).

8. A wheel suspension according to one or more of the preceding Claims, **characterized in that** one support-arm axis of rotation (29) of the upper articulation (2) is situated closer to the vertical median longitudinal plane (25) of the wheel than the further support-arm axis of rotation (28) of the lower articulation (3), and the two support-arm axes of rotation (29 and 28) extend obliquely inwards from the outside towards the longitudinal median axis (30) of the vehicle with respect to the plan view and as viewed in the direction of travel (**F**) and are arranged at an acute opening angle (**β**) with respect to each other.

9. A wheel suspension according to Claim 2 and one or more of the preceding Claims, **characterized in that** the joint (10), on the wheel support, of the triangular support arm (3) is arranged at substantially equal distances from the vertical transverse and longitudinal median planes (26 and 25) of the wheel, and the kinematic pivot axis (27) extends at a positive steering-error angle (**Γ** [*sic* - *recte* **γ**]) of the wheel and with a negative interference-force lever arm (**a**) through the said joint (10) and through a point of intersection (20) formed by the individual support arms (12, 13) of the upper articulation (2).

10. A wheel suspension according to one or more of the preceding Claims, **characterized in that** the kinematic pivot axis (27) extends - as viewed from the side - from the contact face (23) of the wheel obliquely upwards to the rear and contrary to the direction of travel (**F**).

11. A wheel suspension according to Claim 10, **characterized in that** the kinematic pivot axis (27) is situated in front of the vertical median transverse plane (26) of the wheel.

12. A wheel suspension according to one or more of the preceding Claims, **characterized in that** the forward support arm (4) of the lower articulation (3) is orientated at such an angle to the track-rod support arm (6) that the steering axis (24) of the elastokinematic pivot axis (22) is set outside the vertical median longitudinal plane (25) of the wheel and behind the vertical median transverse plane (26) of the wheel in such a way that the distance (**d**) from the median longitudinal axis (25) of the wheel is greater than the distance (**b**) from the median transverse plane (26) of the wheel.

13. A wheel suspension according to one or more of the preceding Claims, **characterized in that** the elastokinematic pivot axis (22) extends from the steering axis (24) situated behind the vertical median transverse plane (26) of the wheel - as viewed from the side - in the contact face (23) of the wheel obliquely forwards with respect to the direction of travel (**F**) and intersects the said median transverse plane (26) of the wheel substantially at the level of the joint (17), on the wheel support, of the rear individual support arm (13) of the upper articulation (2).

14. A wheel suspension according to one or more of the preceding Claims, **characterized in that** the joint (10), on the wheel support, of the triangular support arm (3) is arranged in front of the median transverse plane (26) of the wheel closer to the vertical median longitudinal plane (25) of the wheel than the corresponding joint (19) of the track-rod support arm (6, 6a) behind the median transverse plane (26) of the wheel.

15. A wheel suspension according to one or more of the preceding Claims, **characterized** **in that** the track-rod support arm (6, 6a) is situated substantially in the same horizontal plane as the joint (10), on the wheel support, of the triangular support arm (3) and is held in the joint (19) of an inwardly projecting arm (34) of the wheel support (11), and the said joint (19) is arranged between the joints of the two articulations (2, 3) on the body and on the wheel support and substantially closer to the joints (10, 16 and 17) on the wheel support than to the joints (8, 9 and 14, 15) on the body.

16. A wheel suspension according to Claim 15, **characterized in that** the joint (19), on the wheel support, of the track rod (6; 6a) and a lower joint of the shock-absorbing leg (37) [are] situated on a common axle (35) and bolted to the inwardly projecting arm (34) of the wheel support (11).

17. A wheel suspension according to Claim 16, **characterized in that** the track-rod support arm (6) extends obliquely - as seen in plan view and in the direction of travel (**F**) - inwards to the rear from the outside at the front towards the longitudinal median axis (30) of the vehicle.

18. A wheel suspension according to one or more of the preceding Claims, **characterized in that** the two individual joints (12, 13) of the upper articulation (2) are supported with a relatively large base on the body in the joints (14 and 15) and have such an angle with respect to each other that the elastokinematic pivot axis (22) extends at a relatively great distance (**e**) from the vertical median longitudinal plane (25) of the wheel in a horizontal plane extending through the axis of rotation (40) of the wheel.

19. A wheel suspension according to one or more of the preceding Claims, **characterized in that** the joints (16, 17), on the wheel support, of the two individual support arms (12, 13) of the upper articulation (2) are arranged at substantially the same distance from the vertical median transverse plane (16) [*sic* - *recte* 26] of the wheel, and the joint (14), on the body, of the individual support arm (12) is closer to the vertical median transverse plane (26) of the wheel than the joint (15) of the further individual support arm (13).

20. A wheel suspension according to one or more of the preceding Claims, **characterized in that** the joint (15), on the body, of the rear individual support arm (13) of the upper articulation (2) has a weaker characteristic in the radial direction than the joint (14), on the body, of the further individual support arm (12), but a harder radial characteristic than the joint (9), on the body, of the rear support arm (5) of the lower articulation (3).

21. A wheel suspension according to one or more of the preceding Claims, **characterized in that** the upper and lower articulations (2 and 3) arranged in the respective planes (**X-X** and **Y-Y**) are set obliquely to each other as seen in side view and are pivotable about the axes of rotation (28, 29) of the support arms formed by the joints (8, 9 and 14, 15) on the body, in such a way that a pitching pole (**N**), situated in front of the axis of rotation (40) of the wheel with respect to the direction of travel (**F**), for an "antidive" is formed with a straight movement of the contact point (**R**) of the wheel by way of a spring path.

22. A wheel suspension according to Claim 21, **characterized in that** the contact point (**R**) of the wheel has a straight direction of movement at an angle (39) to the contact surface (23) of the wheel and extending obliquely to the rear with respect to the direction of travel (**F**).

23. A wheel suspension according to one or more of the preceding Claims, **characterized in that** the upper and lower articulations (3 and 2) arranged in the respective plane (**X-X** and **Y-Y**) are set with respect to each other as seen in side view in such a way that in order to achieve a progressive "antisquat" the axis of rotation (40) of the wheel is moved progressively to the rear on a curved path (41) with respect to the direction of travel (**F**) during springing-in.

24. A wheel suspension according to one or more of the preceding Claims, **characterized in that** the two articulations (2 and 3) are set with respect to each other and are mounted on the body in such a way that during springing-in the wheel (1) has a smaller wheel-setting change in the toe-in direction during springing-in than in the toe-out direction during springing-out.

25. A wheel suspension according to one or more of the preceding Claims, **characterized in that** the shock-absorbing leg (37) is arranged substantially parallel to the vertical median transverse plane (26) of the wheel with respect to the side view and is supported on the wheel support (11) behind this plane with respect to the direction of travel (**F**), wherein the shock-absorbing leg (37) extends between the track-rod support arm (6; 6a) and the lower triangular support arm (3) on one side and between the two upper individual support arms (12, 13) of the upper articulation (2), wherein the shock-absorbing leg (37) is set substantially at right angles to the contact plane (23) of the wheel.

## Revendications

1. Suspension de roue pour les roues arrière (1) entraînées d'un véhicule automobile, comportant un support de roue (11), soutenu côté carrosserie par une jambe de force à ressort (37), lequel support est guidé, par deux bras oscillants individuels (12, 13) formant une articulation (2) supérieure et par une articulation (3) inférieure, constituée d'un bras oscillant triangulaire (bras oscillant 4, 5) avec un bras oscillant de barre d'accouplement (6) s'étendant à peu près dans la direction transversale du véhicule, dans laquelle les articulations (2, 3) sont soutenues, côté carrosserie, dans des joints articulés (8, 9 et 14, 15) de caractéristique radiale différente et dans laquelle les bras oscillants individuels (12, 13) divergent dans la direction transversale du véhicule et sont montés dans deux joints articulés (16, 17) espacés du support de roue (11) et le bras articulé triangulaire (bras articulé 4, 5) est maintenu sur le support de roue (11), par un joint articulé (10) et les deux articulations (2 et 3) forment un axe de pivotement de roue (22) élasto-cinématique situé sur le côté extérieur de la roue, avec un pôle de direction (24) situé - par rapport au sens de la marche (F) - derrière un plan transversal médian de roue (26) vertical et à l'extérieur du plan longitudinal médian de roue (25) vertical dans le plan d'appui (23) de la roue, caractérisée en ce que les deux articulations (2, 3) se situent - par rapport au sens de la marche (F) - dans des plans (X-X et Y-Y) obliques inclinés de manière à monter vers l'avant et sont inclinées l'une par rapport à l'autre de manière à former un angle (α) et dans ces plans les joints articulés (8, 9 et 14, 15) côté carrosserie des deux articulations (3 et 2) forment des axes de rotation de bras articulés (28 et 29) espacés, qui, vus de côté et dans le sens de la marche (F), forment des angles différents par rapport à la surface d'appui (23) de la roue et - vus de dessus - sont inclinés l'un par rapport à l'autre sous un angle (β), et en ce que les joints articulés (10, 16 et 17), côté support de roue, faisant face aux deux axes de rotation de bras articulé (28, 29), des deux articulations (3, 2), se situent à proximité d'un plan transversal médian de roue (26) vertical et à proximité immédiate d'un plan longitudinal médian de roue (25) vertical et en ce que les joints articulés (8, 9 et 14, 15) côté carrosserie des deux articulations (3 et 2) présentent une caractéristique radiale définie différente, en vue du pivotement dans le sens du pincement des roues avant autour du joint articulé (8) situé à l'avant de l'articulation inférieure (3).

2. Suspension de roue pour les roues arrière entraînées d'un véhicule automobile avec un axe de pivotement (27) cinématique, s'étendant sur le côté intérieur de la roue, ainsi qu'un axe de pivotement de roue (22) élasto-cinématique situé sur le côté extérieur de la roue selon la revendication 1, caractérisée en ce qu'entre les bras oscillants de barre d'accouplement (6, 6') de chaque côté de la roue il est prévu un dispositif de réglage pour une direction de roue arrière, qui est relié avec les extrémités (18) intérieures libres des bras oscillants de barre d'accouplement (6, 6a) et ceux-ci s'étendent sous un angle de près de 90° par rapport au plan longitudinal médian de roue (25) vertical.

3. Suspension de roue selon les revendications 1 ou 2, caractérisée en ce que l'articulation supérieure (2) et l'articulation inférieure (3) sont maintenues sur un faux-châssis, qui est soutenu élastiquement sur la carrosserie du véhicule.

4. Suspension de roue selon une ou plusieurs des revendications précédentes, caractérisée en ce que le bras oscillant triangulaire de l'articulation inférieure (3) comporte un bras oscillant (5) situé derrière - par rapport au sens de la marche (F) - avec un joint articulé (9) côté carrosserie de caractéristique radiale (32) plus souple qu'un autre joint articulé (8) côté carrosserie du bras oscillant individuel (4) situé à l'avant.

5. Suspension de roue selon une ou plusieurs des revendications précédentes, caractérisée en ce que le bras oscillant (4) situé à l'avant de l'articulation (3) inférieure est maintenu dans un joint articulé (8) élastique, qui comprend un axe de rotation (31) vertical, conçu pour le pivotement.

6. Suspension de roue selon une ou plusieurs des revendications précédentes, caractérisée en ce que l'articulation inférieure (3) est formée par un bras oscillant triangulaire sans entretoise.

7. Suspension de roue selon une ou plusieurs des revendications précédentes, caractérisée en ce que le joint articulé (9) côté carrosserie du bras oscillant (5), situé à l'arrière, de l'articulation inférieure (3), est réalisé avec une caractéristique radiale (32) plus souple que tous les autres joints articulés (8, 14 et 15) côté carrosserie des deux articulations (2 et 3).

8. Suspension de roue selon une ou plusieurs des revendications précédentes, caractérisée en ce qu'un axe de rotation de bras oscillant (29) de l'articulation (2) supérieure est situé plus près du plan longitudinal médian de roue (25) vertical que l'autre axe de rotation de bras oscillant (28) de l'articulation inférieure (3) et en ce que les deux axes de rotation de bras oscillant (29 et 28) s'étendent - vus de dessus et dans le sens de la marche (F) - obliquement, de l'extérieur vers l'intérieur à l'avant, en direction de l'axe médian longitudinal (30) du véhicule et forment entre eux un angle d'ouverture (β) aigu.

9. Suspension de roue selon la revendication 2 et une ou plusieurs des revendications précédentes, caractérisée en ce que le joint articulé (10) côté support de roue du bras oscillant triangulaire (3) est situé à des distances à peu près égales par rapport au plan transversal et au plan longitudinal médian de roue (26 et 25) vertical et en ce que l'axe de pivotement (27) cinématique passe par ce joint articulé (10) et par un point d'intersection (20) formé par les bras oscillants individuels (12, 13) de l'articulation (2) supérieure, avec un angle de chasse (Γ) positif et un bras de levier de force de perturbation (a) négatif.

10. Suspension de roue selon une ou plusieurs des revendications précédentes, caractérisée en ce que l'axe de pivotement (27) cinématique s'étend - dans une vue de côté - à partir de la surface d'appui (23) de la roue, obliquement vers l'arrière et vers le haut, dans le sens contraire au sens de la marche (F).

11. Suspension de roue selon la revendication 10, caractérisée en ce que l'axe de pivotement (27) cinématique est situé devant le plan transversal médian de roue (26) vertical.

12. Suspension de roue selon une ou plusieurs des revendications précédentes, caractérisée en ce que le bras oscillant (4) situé à l'avant de l'articulation (3) inférieure est situé par rapport au bras oscillant de barre d'accouplement (6) sous un angle d'écartement tel que le pôle de direction (24) de l'axe de pivotement (22) élasto-cinématique se place à l'extérieur du plan longitudinal médian de roue (25) vertical et derrière le plan transversal médian de roue (26) vertical de manière que la distance (d) par rapport à l'axe longitudinal médian de roue (25) est supérieure à la distance (b) par rapport au plan transversal médian de roue (26).

13. Suspension de roue selon une ou plusieurs des revendications précédentes, caractérisée en ce que l'axe de pivotement (22) élasto-cinématique s'étend - vu de côté - à partir du pôle de direction (24), situé derrière le plan transversal médian de roue (26) vertical, dans la surface d'appui de roue (23), obliquement vers l'avant - par rapport au sens de la marche (S) - et coupe ce plan transversal médian de roue (26) à peu près à hauteur du joint articulé (17) côté support de roue du bras oscillant individuel (13) situé à l'arrière du bras oscillant individuel (13) de l'articulation (2) supérieure.

14. Suspension de roue selon une ou plusieurs des revendications précédentes, caractérisée en ce que le joint articulé (10) côté support de roue du bras oscillant triangulaire (3) est situé devant le plan transversal médian de roue (26) plus près du plan longitudinal médian de roue (25) vertical que le joint articulé (19) correspondant du bras oscillant de barre d'accouplement (6, 6a) derrière le plan transversal médian de roue (26).

15. Suspension de roue selon une ou plusieurs des revendications précédentes, caractérisée en ce que le bras oscillant de barre d'accouplement (6 ; 6a) se situe dans un plan à peu près horizontal avec le joint articulé (10) côté support de roue du bras oscillant triangulaire (3) et est maintenu dans le joint articulé (19) d'un bras (34) dirigé vers l'intérieur du support de roue (11) et en ce que ce joint articulé (19) se situe entre les joints articulés côté carrosserie et les joints articulés côté support de roue des deux articulations (2, 3) et sensiblement plus près des joints articulés (10, 16 et 17) côté support de roue que des joints articulés (8, 9 et 14, 15) côté carrosserie.

16. Suspension de roue selon la revendication 15, caractérisée en ce que le joint articulé (19) côté support de roue de la barre d'accouplement (6 ; 6a) et un joint articulé inférieur de la jambe de force à ressort (37) se situent sur un axe commun (35) et sont vissés avec le bras (34) dirigé vers l'intérieur du support de roue (11).

17. Suspension de roue selon la revendication 16, caractérisée en ce que le bras oscillant de barre d'accouplement (6) s'étend - vu de dessus et dans le sens de la marche (F) - obliquement de l'extérieur à l'avant vers l'intérieur à l'arrière par rapport à l'axe médian longitudinal (30) du véhicule.

18. Suspension de roue selon une ou plusieurs des revendications précédentes, caractérisée en ce que les deux bras oscillants individuels (12, 13) de l'articulation (2) supérieure sont soutenus avec une base relativement grande côté carrosserie dans les joints articulés (14 et 15) et présentent entre eux un angle d'écartement tel que l'axe de pivotement (22) élasto-cinématique s'étend dans un plan horizontal, passant par l'axe de rotation de roue (40), à une distance (e) relativement grande par rapport au plan longitudinal médian de roue (25) vertical.

19. Suspension de roue selon une ou plusieurs des revendications précédentes, caractérisée en ce que les joints articulés (16, 17) côté support de roue des deux bras oscillants individuels (12, 13) de l'articulation (2) supérieure se situent à peu près à la même distance par rapport au plan transversal médian de roue (16) vertical et en ce que le joint articulé (14) côté carrosserie du bras oscillant individuel (12) est plus près du plan transversal médian de roue (26) vertical que le joint articulé (15) de l'autre bras oscillant individuel (13).

20. Suspension de roue selon une ou plusieurs des revendications précédentes, caractérisée en ce que le joint articulé (15) côté carrosserie du bras oscillant individuel (13) situé à l'arrière de l'articulation (2) supérieure, présente une caractéristique plus souple en direction radiale que le joint articulé (14) côté carrosserie de l'autre bras oscillant individuel (12), mais une caractéristique radiale plus dure que le joint articulé (9) côté carrosserie du bras oscillant (5) situé à l'arrière de l'articulation (3) inférieure.

21. Suspension de roue selon une ou plusieurs des revendications précédentes, caractérisée en ce que l'articulation supérieure (2) et l'articulation inférieure (3) situées dans le plan (X-X et Y-Y) respectif sont inclinées obliquement l'une par rapport à l'autre - vues de côté - et peuvent pivoter autour des axes de rotation des bras oscillants (28, 29), formés par les joints articulés (8, 9 et 14, 15) côté carrosserie, de manière qu'il se forme un pôle de tangage (N) situé - par rapport au sens de la marche (F) - devant l'axe de rotation de roue (40) pour un "antidive" (anti-piqué) avec un déplacement rectiligne du point d'appui (R) de la roue, par un débattement.

22. Suspension de roue selon la revendication 21, caractérisée en ce que le point d'appui de roue (R) présente une direction de déplacement rectiligne sous un angle (39) par rapport à la surface d'appui de roue (23) et qui s'étend - par rapport au sens de la marche (F) - obliquement vers l'arrière.

23. Suspension de roue selon une ou plusieurs des revendications précédentes, caractérisée en ce que l'articulation supérieure (3) et l'articulation inférieure (2) situées dans le plan (X-X et Y-Y) respectif sont inclinées l'une par rapport à l'autre - dans une vue de côté - de manière que pour obtenir un "antisquat" (anti-acroupissement) progressif, l'axe de rotation de roue (40) se déplace, progressivement vers l'arrière - par rapport au sens de la marche (F) - sur une trajectoire courbe (41), lors de la compression du ressort.

24. Suspension de roue selon une ou plusieurs des revendications précédentes, caractérisée en ce que les deux articulations (2 et 3) sont inclinées l'une par rapport à l'autre et montées côté carrosserie de manière que la roue (1) présente, lors de la compression du ressort, un plus petit changement de position de la roue dans le sens du pincement avant que lors du débattement dans le sens de l'ouverture.

25. Suspension de roue selon une ou plusieurs des revendications précédentes, caractérisée en ce que la jambe de force à ressort (37) est située - vue de côté - à peu près parallèlement au plan transversal médian de roue (26) vertical et prend appui derrière ce plan - par rapport au sens de la marche (F) - contre le support de roue (11), la jambe de force à ressort (37) s'étendant entre le bras oscillant de barre d'accouplement (6 ; 6a) et le bras oscillant triangulaire (3) inférieur d'une part et entre les deux bras oscillants individuels (12, 13) supérieurs de l'articulation supérieure (2), la jambe de force à ressort (37) étant à peu près verticale par rapport au plan d'appui de roue (23).
